# EUROPEAN PATENT APPLICATION

(11) **EP 4 826 442 A1**
(43) Date of publication of application: **21.10.2026**
(21) Application number: 23961386.2
(22) Date of filing: 12.12.2023
(51) Int. Cl.: G02F 1/035, G02B 6/12, G02B 6/125

(54) **OPTICAL WAVEGUIDE ELEMENT, OPTICAL MODULATOR, AND OPTICAL TRANSMISSION DEVICE**

(71) Applicant: Sumitomo Osaka Cement Co., Ltd., Tokyo, 105-8641 (JP)
(72) Inventor: MURATA, Yumi, Tokyo 105-8641 (JP); OKAHASHI, Kosuke, Tokyo 105-8641 (JP)
(74) Representative: Wächter, Jochen
(86) International application number: PCT/JP2023/044433
(87) International publication number: WO 2025/126318

(57) **Abstract**

The present invention aims to provide an optical waveguide element in which a Mach-Zehnder type optical waveguide having a folded portion is formed, in which optical crosstalk is suppressed and an extinction ratio is improved, an optical modulator including the optical waveguide element, and an optical transmitter including the optical modulator. The optical waveguide element 1A according to the present invention is an optical waveguide element in which an optical waveguide 3 is formed on a substrate 2 having an electro-optic effect. The optical waveguide 3 is composed of a Mach-Zehnder type optical waveguide having folded portions B1, B2, B3, and B4. A dummy pattern 110 capable of suppressing optical crosstalk is formed in the region between adjacently extending optical waveguides 3.

## Description

### [Technical Field]

The present invention relates to an optical waveguide element in which a Mach-Zehnder type optical waveguide is formed on a substrate, an optical modulator including the optical waveguide element, and an optical transmitter including the optical modulator.

### [Background Technology]

In recent years, in the fields of optical communication and optical measurement, optical modulators have been used in which a metallic modulation electrode is formed to modulate the light waves propagating in the optical waveguide in an optical waveguide element in which an optical waveguide is formed on a substrate using lithium niobate (LiNbO₃: hereinafter also referred to as LN) having an electro-optic effect. In addition, in recent years, optical waveguide elements and optical modulators have been miniaturized and integrated by forming a Mach-Zehnder type optical waveguide. Furthermore, the length of optical waveguide elements and optical modulators has been shortened by arranging the optical input and output parts on the same side of the substrate using a folded Mach-Zehnder type optical waveguide.

For example, the optical control element described in the following Patent Document 1 has an input part and an output part of the optical waveguide formed on the same side of the substrate. The optical waveguide has a Mach-Zehnder type optical waveguide part that branches from one optical waveguide into two branch waveguides and combines the two branch waveguides to form one optical waveguide, and the branch waveguide has an even number of folded portions.

### [Prior Art Documents]

### [Patent Documents]

[Patent Document 1] Japanese Patent Application Publication No. 2021-162641

### [Summary of the Invention]

### [Problem to be Solved by the Invention]

In the optical waveguide element, the optical waveguides are arranged so that the distance between the optical waveguides is reduced by miniaturization and integration. In an optical waveguide element having a Mach-Zehnder type optical waveguide, particularly in a Mach-Zehnder type optical waveguide having a folded portion, the number of waveguides extending in parallel in the width direction increases. As a result, the distance between adjacent optical waveguides becomes short, thereby causing a problem that light leaking from one optical waveguide (leaked light) is likely to mix with and interfere with the light in the other optical waveguide, so that it is easier to occur optical crosstalk. In addition, there is a problem that the variation in processing depth increases due to the microloading effect during etching, resulting in deteriorated characteristics, and a solution to this problem is desired.

The present invention has been made in consideration of the above problems, and aims to provide an optical waveguide element in which a Mach-Zehnder type optical waveguide having a folded portion is formed, suppressing optical crosstalk and improving the extinction ratio. In addition, the present invention aims to provide an optical modulator including the optical waveguide element, and an optical transmitter including the optical modulator.

### [Means for Solving the Problem]

In order to solve the above problems, the optical waveguide element, optical modulator, and optical transmitter according to the present invention have the following technical features.

In order to achieve the above object, the optical waveguide element according to the present invention is an optical waveguide element including optical waveguides formed on a substrate having an electro-optic effect, characterized in that: the optical waveguide is configured to include a Mach-Zehnder type optical waveguide having a folded portion; and a dummy pattern capable of suppressing optical crosstalk is formed in the region between the adjacently extending optical waveguides.

In addition to the pattern (hereinafter referred to as an real pattern) required for modulating light, a dummy pattern is formed between the adjacently extending real patterns on the substrate of the optical waveguide element according to the present invention. According to this configuration, by forming a dummy pattern in the region between the adjacently extending optical waveguides, it is possible to isolate the adjacent optical waveguides and to guide or absorb the light leaking from the optical waveguide (leaked light) with the dummy pattern, thereby suppressing optical crosstalk. The leaked light from an optical waveguide is one of the factors that deteriorate the characteristics (e.g., extinction ratio) of an optical waveguide element, but the dummy pattern guides or absorbs the leaked light, thereby stabilizing the characteristics and thus providing an optical waveguide element with an improved extinction ratio in particular.

When a Mach-Zehnder type optical waveguide having a folded portion is formed in an optical waveguide element, the shape of the optical waveguide becomes complex and the distance between adjacent optical waveguides becomes short. For this reason, optical crosstalk due to leaked light to adjacent optical waveguides is likely to occur in the optical waveguide element. In contrast, in the optical waveguide element according to the present invention, a dummy pattern is formed in the region between adjacently extending optical waveguides to guide or absorb the leaked light, thereby suppressing optical crosstalk.

The dummy pattern according to the present invention may also be a pattern that allows for characteristic inspection of the optical waveguide element. The characteristic inspection of optical waveguide elements is a necessary process to prevent defective products from being sent to the assembly process, but the inspection generally requires a lot of time and effort. In response to this problem, by forming the dummy pattern according to the present invention into a pattern that matches the inspection target, the characteristics of the optical waveguide element can be easily measured and evaluated, thereby making it possible to reduce the time and effort required for the characteristic inspection. In addition, the characteristic inspection using the dummy pattern according to the present invention may be performed in the wafer state or after chipping. By preparing a dummy pattern in the optical waveguide element that allows the characteristic inspection of the optical waveguide element, there is also the advantage that, when a defect occurs in the optical waveguide element, a defect analysis can be easily performed using the dummy pattern.

Furthermore, by forming the dummy pattern according to the present invention on the substrate, the effect of suppressing the microloading effect can be expected. The microloading effect is a phenomenon in which the etching speed is slower in areas with high pattern density than in areas with low density, or the etching speed is slower as the pattern dimensions become thinner, and there is a possibility that the accuracy of the etching process is reduced. In contrast, when a dummy pattern is formed in an area where the density of the real pattern formed in the optical waveguide element is low, the deviation in pattern density (difference in density) is reduced, and it is possible to mitigate the difference in etching speed due to the microloading effect. In particular, since the density of the real pattern tends to be relatively low in the area on the inner periphery side (the inner periphery side of the curve due to the folded portion) of the Mach-Zehnder type optical waveguide having a folded portion, a dummy pattern may be formed in this area to reduce the deviation in pattern density. This makes it possible to suppress the variation in processing depth during etching, and it is therefore expected to stabilize the characteristics of the optical waveguide element.

In the optical waveguide element according to the present invention, in the above configuration, the dummy pattern may be formed in the region between the optical waveguide constituting the optical input portion and the optical waveguide constituting the optical output portion.

In the optical waveguide element according to the present invention, the Mach-Zehnder type optical waveguide has a folded portion, and the optical waveguide constituting the optical input portion and the optical waveguide constituting the optical output portion may extend in a state of being approximately parallel. By forming a dummy pattern between the optical waveguides constituting the optical input portion and the optical output portion, it is possible to suppress optical crosstalk between the optical waveguide on the input side and the optical waveguide on the output side. In addition, since an area where no real pattern is formed is likely to be generated between the optical waveguide on the input side and the optical waveguide on the output side (the inner side of the curve caused by the folded portion), by forming a dummy pattern in this area, it is possible to alleviate the bias in pattern density, suppress the microloading effect, and stabilize the characteristics as an optical waveguide element.

In the optical waveguide element according to the present invention, in the above configuration, the dummy pattern may be formed in the region between the multiple optical waveguides constituting the optical output portion.

For example, when two IQ optical modulation portions having Mach-Zehnder type optical waveguides are arranged in parallel and each of the two IQ optical modulation portions generates and outputs a 2-bit optical signal using QPSK (Quadrature Phase Shift Keying) or the like, the optical output portion has two optical output waveguides. When multiple optical output waveguides are provided in the optical output portion in this way, optical crosstalk between the multiple optical output waveguides can be suppressed by forming a dummy pattern between the multiple optical output waveguides. In addition, by forming a dummy pattern in the region between the multiple optical output waveguides, it is possible to alleviate the bias in pattern density, suppress the microloading effect, and stabilize the characteristics as an optical waveguide element.

The optical waveguide element according to the present invention, in the above configuration, may have the input and output ends of the dummy pattern provided on the end face or top face of the substrate.

With the above configuration, the input and output ends of the dummy pattern can be provided on the end face or top face of the substrate and exposed to the outside of the substrate, and the dummy pattern can capture leaked light from the optical waveguide and guide the leaked light to the outside of the substrate. Furthermore, when inspecting the characteristics of an optical waveguide element using a dummy pattern, the characteristics of the optical waveguide element can be evaluated by inputting light to the input end of the dummy pattern and measuring the light output from the output end of the dummy pattern.

In the optical waveguide element according to the present invention, in the above configuration, the dummy pattern may have a folded portion.

With the above configuration, it is possible to form a dummy pattern having a folded portion curved in the same shape as the folded portion of the Mach-Zehnder optical waveguide formed in the optical waveguide element.

In the optical waveguide element according to the present invention, in the above configuration, the optical input end and the optical output end of the Mach-Zehnder type optical waveguide and the input end and the output end of the dummy pattern may be formed on the same side of the substrate.

With the above configuration, the input end and the output end of the dummy pattern can be formed on the same side as the optical input end and the optical output end of the Mach-Zehnder type optical waveguide. When inspecting the characteristics of an optical waveguide element using a dummy pattern, light is input to the input end of the dummy pattern, and the light output from the output end of the dummy pattern through the dummy pattern having a folded portion is measured, thereby making it possible to evaluate the characteristics of the optical waveguide element reflecting the state of the folded portion.

The optical waveguide element according to the present invention, in the above configuration, is characterized in that the Mach-Zehnder type optical waveguide has, between an optical input portion including an optical input waveguide and an optical output portion including first and second optical output waveguides, a parent branch portion that branches a light wave propagating through the optical input waveguide and propagates the light wave to first and second parent branch waveguides, a first child branch portion that branches a light wave propagating through the first parent branch waveguide and propagates the light wave to first and second child branch waveguides, and a second child branch portion that branches the light wave propagating through the first parent branch waveguide and propagates the light wave to the first and second child branch waveguides, and a first multiplexing portion that combines the light waves propagating through the first and second child branch waveguides and propagates the light wave to the first optical output waveguide, a second child branch portion that branches the light waves propagating through the second parent branch waveguide and propagates the light waves to the third and fourth child branch waveguides, and a second multiplexing portion that combines the light waves propagating through the third and fourth child branch waveguides and propagates the light wave to the second optical output waveguide, and each of the first to fourth child branch waveguides may have the folded portion.

According to the above configuration, two IQ optical modulation portions having Mach-Zehnder type optical waveguides are arranged side by side, and a 2-bit optical signal can be generated and output by QPSK in each of the two IQ optical modulation portions. Furthermore, by providing a folded portion in each of the first to fourth child branch waveguides constituting the Mach-Zehnder type optical waveguide, the optical input end and the two optical output ends can be formed on the same side of the substrate.

In the optical waveguide element according to the present invention, in the above configuration, the dummy pattern is at least formed in the region between the multiple optical waveguides constituting the optical output portion, and may have a folded portion in any of the following regions: the region between the first parent branch waveguide and the second parent branch waveguide adjacent to each other, the region between the second child branch waveguide and the third child branch waveguide adjacent to each other, and the region between the first optical output waveguide and the second optical output waveguide adjacent to each other.

With the above configuration, a dummy pattern is formed between two IQ optical modulation portions having Mach-Zehnder type optical waveguides, and the folded portion of the dummy pattern can be provided at any position between the two IQ optical modulation portions.

In the optical waveguide element according to the present invention, the first optical output waveguide and the second optical output waveguide may be substantially linear.

With the above configuration, the optical propagation loss in the first optical output waveguide and the second optical output waveguide can be reduced.

In the optical waveguide element according to the present invention, the dummy pattern may be formed so as to be linearly symmetrical with respect to the center line of the folded portion of the Mach-Zehnder type optical waveguide.

With the above configuration, the bias in pattern density can be mitigated in a well-balanced manner, and the bias in pattern density can be reduced, and the variation in processing depth during etching can be suppressed, which is expected to stabilize the characteristics of the optical waveguide element.

In the optical waveguide element according to the present invention, in the above configuration, the dummy pattern may be formed to have a portion that runs parallel to the optical waveguide while maintaining a certain distance from the optical waveguide.

With the above configuration, the dummy pattern can be shaped to match the optical waveguide and run parallel to it, so that the leaked light from the optical waveguide can be captured reliably and thus optical crosstalk can be more reliably suppressed.

Furthermore, the optical modulator according to the present invention is characterized by having the above optical waveguide element, a housing that houses the optical waveguide element, an input optical fiber connected to the optical input portion of the optical waveguide element, and an output optical fiber connected to the optical output portion of the optical waveguide element.

Furthermore, the optical transmitter according to the present invention is characterized by having the above optical modulator, and an electronic circuit that generates an electrical signal for causing the optical waveguide element to perform a modulation operation.

### [Effects of the Invention]

According to the present invention, by forming a dummy pattern capable of suppressing optical crosstalk in an optical waveguide element in which a Mach-Zehnder type optical waveguide having a folded portion is formed, it is possible to improve the extinction ratio of the optical waveguide element while suppressing optical crosstalk. In addition, by performing a characteristic inspection of the optical waveguide element using the dummy pattern, it is possible to easily measure and evaluate the characteristics of the optical waveguide element. Furthermore, by forming a dummy pattern on a substrate, it is possible to suppress the microloading effect, suppressing the variation in processing depth during etching processing, and stabilizing the characteristics of the optical waveguide element.

### [Brief Description of the Drawings]

[FIG. 1] A plan view of an optical waveguide element in a first embodiment of the present invention.
[FIG. 2] A cross-sectional view showing an example of the A1-A1 cross section of FIG. 1, showing a configuration when there are no irregularities other than the optical waveguide and the dummy pattern on the substrate.
[FIG. 3] A cross-sectional view showing another example of the A1-A1 cross-section of FIG. 1, showing a configuration when the substrate has irregularities other than the optical waveguide and the dummy pattern.
[FIG. 4] A plan view of an optical waveguide element in a second embodiment of the present invention.
[FIG. 5] A plan view of an optical waveguide element in a third embodiment of the present invention.
[FIG. 6] A plan view of an optical waveguide element in a fourth embodiment of the present invention.
[FIG. 7] A plan view of an optical waveguide element in a fifth embodiment of the present invention.
[FIG. 8] A plan view of an optical waveguide element in a sixth embodiment of the present invention.
[FIG. 9] A plan view of an optical waveguide element in a seventh embodiment of the present invention.
[FIG. 10] A plan view of an optical waveguide element in an eighth embodiment of the present invention.
[FIG. 11] A cross-sectional view showing an example of the A2-A2 cross-section of FIG. 10, showing a configuration when the substrate has no irregularities other than the optical waveguide and the dummy pattern.
[FIG. 12] A cross-sectional view showing another example of the A2-A2 cross section of FIG. 10, showing a configuration when the substrate has irregularities other than the optical waveguide and the dummy pattern.
[FIG. 13] A plan view of an optical waveguide element in a ninth embodiment of the present invention.
[FIG. 14] A plan view of an optical waveguide element in a tenth embodiment of the present invention.
[FIG. 15] A plan view showing an optical modulator and an optical transmitter according to the present invention.

### [Embodiment for Carrying out the Invention]

Embodiments of the present invention will be described below with reference to the drawings. The drawings referred to in this specification do not necessarily have accurate scale with respect to the actual dimensions, and some parts are exaggerated or simplified in order to show the configuration according to the present invention in a schematic manner.

As exemplified in the first to tenth embodiments, the optical waveguide element according to the present invention is characterized in that an optical waveguide including a Mach-Zehnder type optical waveguide having a folded portion is formed on a substrate having an electro-optic effect, and a dummy pattern is formed in the region between adjacently extending optical waveguides. The dummy pattern functions as an optical crosstalk suppression pattern that suppresses optical crosstalk. Furthermore, the dummy pattern may be used as an inspection pattern for inspecting the characteristics of the optical waveguide element, and may be formed at a position that reduces the bias in pattern density so that the difference in etching speed due to the microloading effect can be reduced.

### (First embodiment)

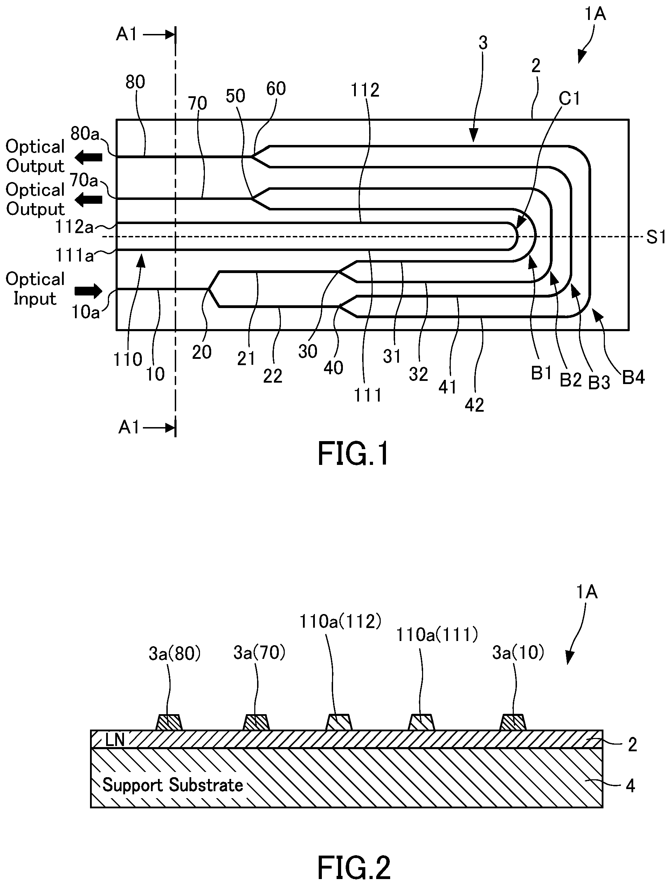

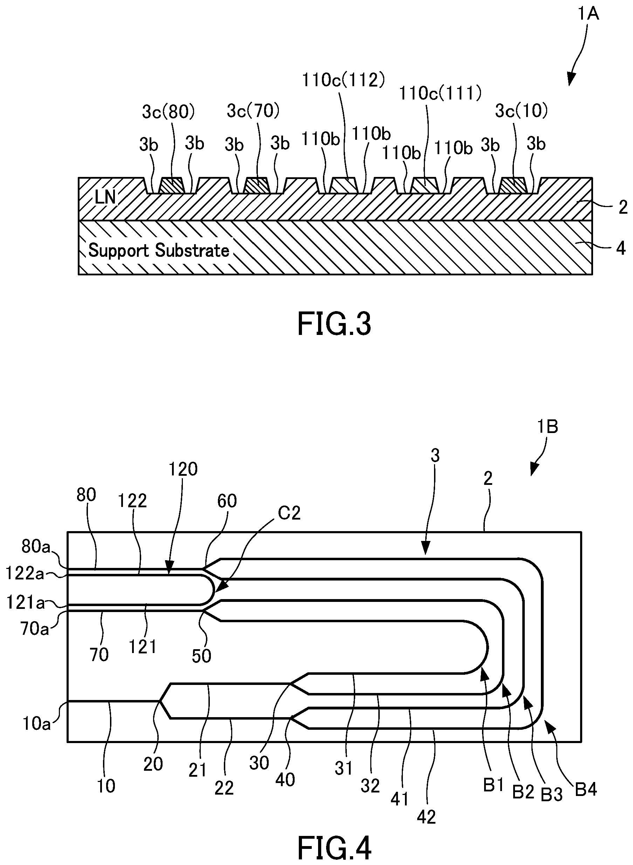

First, the first embodiment of the present invention will be described. FIG. 1 is a plan view of an optical waveguide element 1A in the first embodiment of the present invention. FIG. 2 and FIG. 3 are cross-sectional views showing an example and another example of the A1-A1 cross section of FIG. 1, respectively. In FIG. 1, the optical waveguide element 1A is illustrated so that its width direction is the up-down direction on the paper, its length direction is the left-right direction on the paper, and its thickness direction is perpendicular to the paper.

The optical waveguide element 1A shown in FIG. 1 has a substrate 2 having an electro-optic effect. As the substrate 2 having an electro-optic effect, substrates such as lithium niobate (LN), lithium tantalate (LT), lead lanthanum zirconate titanate (PLZT), etc., substrates of these materials doped with MgO, vapor-deposited films of these materials, composite substrates in which these materials are bonded to a substrate of a different type, etc. can be used. In addition, various materials such as semiconductor materials and organic materials can also be used as the substrate 2 of the optical waveguide element 1A.

The thickness of the substrate 2 is not particularly limited, but may be set to 20 µm or less, preferably 10 µm or less, more preferably 5 µm or less or 2 µm or less, for example, in order to improve the electrolytic efficiency for the optical waveguide 3 formed on the substrate 2. In such a case, for example, as shown in FIG. 3, a support substrate (reinforcing substrate) 4 may be disposed under the substrate 2 to reinforce the mechanical strength. The support substrate 4 is not particularly limited, but may have a thickness of, for example, 0.2~1.0 mm. The support substrate 4 may be directly bonded to the substrate 2, or may be attached to the substrate 2 through a bonding layer (adhesive layer). The material of the support substrate 4 is not particularly limited, but the same material as the substrate 2 may be used, and for example, semiconductor materials such as LN, glass, and Si may be used.

The optical waveguide 3 is formed on the substrate 2 of the optical waveguide element 1A. The optical waveguide 3 is a path along which light propagates within the substrate 2. The material of the optical waveguide 3 is not particularly limited, and may be the same material as that of the substrate 2, such as LN, or may be an inorganic material such as SiO₂ or Al₂O₃. The optical waveguide 3 may be formed by combining the above materials, for example by applying a permanent resist onto the substrate 2 made of LN to form a pattern of a spot size converter (SSC).

The method of forming the optical waveguide 3 on the substrate 2 is also not particularly limited, and may be, for example, a convex optical waveguide (rib-type optical waveguide or ridge-type optical waveguide) having a convex portion (rib portion or ridge portion) in the portion corresponding to the optical waveguide 3. The optical waveguide 3 may be formed by forming a high refractive index portion made of a high refractive index material such as Ti on the surface of the substrate 2 by thermal diffusion or proton exchange. Furthermore, a composite optical waveguide 3 may be formed by diffusing a high refractive index material into the convex portion of the convex optical waveguide.

When a convex optical waveguide is formed as the optical waveguide 3, the optical waveguide 3 may be formed by providing a convex portion (convex portion 3a in FIG. 2) protruding from the surface of the substrate 2, as shown in the cross-sectional view of FIG. 2, for example. The optical waveguide 3 may also be formed on the substrate 2 by forming grooves 3b on both sides of the portion corresponding to the optical waveguide 3 and providing a convex portion (convex portion 3c in FIG. 3) sandwiched between the grooves 3b, as shown in the cross-sectional view of FIG. 3, for example.

The end portion of the optical waveguide 3 is configured to allow input and output of light, and the optical waveguide 3 may be exposed to the outside from the end face of the substrate 2, for example, or may have a grating structure or SSC structure.

A Mach-Zehnder type optical waveguide is formed as the optical waveguide 3 on the substrate 2 of the optical waveguide element 1A. The Mach-Zehnder type optical waveguide is a waveguide that has at least one branching portion and at least one combining portion as basic components. The branching portion is a portion that branches one optical waveguide into two optical waveguides, and the combining portion is a portion that connects two optical waveguides to combine them into one optical waveguide. The branching portion and the combining portion can be realized by optical couplers or the like.

As an example, as shown in FIG. 1, a multi-stage Mach-Zehnder type optical waveguide is formed on the substrate 2 of the optical waveguide element 1A. The Mach-Zehnder type optical waveguide shown in FIG. 1 has a first child branching portion 30 and a second child branch portion 40 provided in the rear stage of the parent branching portion 20. This makes it possible for the light waves branched by the parent branching portion 20 to be further branched by the first child branching portion 30 and the second child branch portion 40, respectively.

A light wave from the outside is input to the optical input waveguide 10 through the optical input end 10a. The optical input end 10a and the optical input waveguide 10 constitute the optical input portion of the optical waveguide element 1A. The parent branch portion 20 branches the light wave propagating through the optical input waveguide 10 into two branch waveguides (first and second parent branch waveguides) 21, 22.

The first child branch portion 30 branches the light wave propagating through one of the branch waveguides 21 branched by the parent branch portion 20 into two branch waveguides (first and second child branch waveguides) 31, 32. As a result, the light wave branched by the parent branch portion 20 is further branched by the first child branch portion 30. The part where the branch waveguides 31, 32 are formed is provided with an action portion (modulation portion) for modulating the optical signal.

The first child multiplexing portion (first multiplexing portion) 50 multiplexes (combines) the light waves propagating through the two branching waveguides 31, 32 branched by the first child branching portion 30. The light waves multiplexed by the first child multiplexing portion 50 are output to the outside from the optical output waveguide (first optical output waveguide) 70 through the optical output end 70a. The optical output waveguide 70 and the optical output end 70a constitute the optical output portion of the optical waveguide element 1A.

The second child branch portion 40 branches the light waves propagating through the other branching waveguide 22 branched by the parent branching portion 20 into two branching waveguides (third and fourth child branch waveguides) 41, 42. As a result, the light waves branched by the parent branching portion 20 are further branched by the second child branch portion 40. In the portion where the two branching waveguides 41, 42 are formed, an action portion (modulation portion) for modulating the optical signal is provided.

The second child multiplexing portion (second multiplexing portion) 60 multiplexes (combines) the light waves propagating through the two branching waveguides 41, 42 branched in the second child branch portion 40. The light waves multiplexed in the second child multiplexing portion 60 are output to the outside from the optical output waveguide (second optical output waveguide) 80 through the optical output end 80a. The optical output waveguide 80 and the optical output end 80a constitute the optical output portion of the optical waveguide element 1A.

The Mach-Zehnder type optical waveguide formed in the substrate 2 of the optical waveguide element 1A has a folded portion. The folded portion is a portion folded back so that the propagation direction of the light waves is reversed (approximately 180° opposite direction). For example, as shown in FIG. 1, the branched waveguides 31, 32, 41, and 42 formed in the optical waveguide element 1A each have a folded portion (folded portions B1, B2, B3, and B4 in FIG. 1) that folds back the optical waveguide 3 so that it faces in the opposite direction (in the direction opposite to approximately 180°). The folded portion may be formed so that the optical waveguide 3 is folded back approximately 180°, and may be, for example, approximately U-shaped, but the shape is not particularly limited. The folded portion may be formed, for example, in a semicircular shape curved with a constant or variable curvature, or may be formed by a straight portion and two quadrants connected to both ends of the straight portion by arranging two folding portions that bend approximately 90° in two places. By folding back the optical waveguide 3 at the folded portion in this way, the propagation direction of the light wave can be reversed, and the optical input end 10a and the optical output ends 80a and 80b of the optical waveguide element 1A can also be formed on the same side of the substrate 2.

The optical waveguide 3 formed on the substrate 2 of the optical waveguide element 1A is a pattern required for modulating light. Although not shown, an electrode pattern made of a general metal material such as gold or copper is also formed on the substrate 2 in order to modulate the light wave propagating through the optical waveguide 3. In this specification, the optical waveguide pattern and electrode pattern required for modulating light are referred to as real patterns.

In addition to the real patterns, a dummy pattern 110 is formed on the substrate 2 of the optical waveguide element 1A.

The dummy pattern 110 is formed between adjacently extending real patterns. In the optical waveguide element 1A shown in FIG. 1, the dummy pattern 110 is formed in the area surrounded by the optical input waveguide 10, the branching waveguides 21 and 31, and the optical output waveguide 70.

The dummy pattern 110 may have a configuration similar to that of the optical waveguide 3. For example, a convex portion (rib portion or ridge portion) may be formed in the portion corresponding to the dummy pattern 110, or the dummy pattern 110 may be formed by forming a high refractive index portion made of a high refractive index material such as Ti on the surface of the substrate 2 by thermal diffusion or proton exchange. The dummy pattern 110 may also be formed by diffusing a high refractive index material in the convex portion. The dummy pattern 110 may be formed of the same material as the optical waveguide 3, or may be formed of a material different from the optical waveguide 3.

As described later, the dummy pattern 110 may be used to inspect the characteristics of the optical waveguide element 1A. By making the dummy pattern 110 have the same configuration as the optical waveguide 3, it can be used as an inspection waveguide for measuring optical characteristics. The dummy pattern 110 may also be formed using the same shape and material as the electrode formed on the substrate 2. By making the dummy pattern 110 have the same configuration as the electrode, it can be used as an inspection electrode for measuring electrical characteristics.

In the optical waveguide element 1A shown in FIG. 1, the dummy pattern 110 is formed by a convex portion. In this case, the dummy pattern 110 may be formed on the substrate 2 by providing a convex portion (convex portion 110a in FIG. 2) protruding from the surface of the substrate 2, as shown in the cross-sectional view of FIG. 2, for example. The dummy pattern 110 may also be formed on the substrate 2 by forming grooves 110b on both sides of the portion corresponding to the dummy pattern 110 and providing a convex portion (convex portion 110c in FIG. 3) sandwiched between the grooves 110b, as shown in the cross-sectional view of FIG. 3, for example.

The dummy pattern 110 is formed at a position sandwiched between adjacently extending optical waveguides 3. In the first embodiment, an aspect in which the dummy pattern 110 is formed between the optical input waveguide 10 and the optical output waveguide 70 is illustrated. In this way, by forming the dummy pattern 110 in the region between adjacently extending optical waveguides 3, the adjacent optical waveguides 3 can be isolated, and the leaked light from the optical waveguides 3 can be captured by the dummy pattern 110 and guided to the outside or absorbed. As a result, it is possible to suppress optical crosstalk in which the leaked light from one optical waveguide 3 mixes with the other optical waveguide 3 and interferes with it. The dummy pattern 110 shown in FIG. 1 can suppress optical crosstalk between the input light propagating through the optical input waveguide 10 and the output light propagating through the optical output waveguide 70.

The dummy pattern 110 can be formed in any region between adjacently extending optical waveguides 3. In the first embodiment, the dummy pattern 110 is disposed between the optical input waveguide 10 and the optical output waveguide 70, but it may be disposed, for example, between two branched waveguides branched at a branching portion. The number of dummy patterns 110 is also not particularly limited. Only one dummy pattern 110 may be formed on the substrate 2, or multiple dummy patterns 110 may be formed in the same region or different regions of the substrate 2.

The dummy pattern 110 may be formed inside the outer periphery (outer periphery) of the Mach-Zehnder optical waveguide having a folded portion. The outer periphery of the Mach-Zehnder optical waveguide having a folded portion means the outer periphery of the region including the Mach-Zehnder optical waveguide. In order to ensure the symmetry of the cross section, the dummy pattern 110 may be formed both inside and outside the outer periphery of the Mach-Zehnder optical waveguide. The Mach-Zehnder optical waveguide having a folded portion may be a parent Mach-Zehnder formed by a parent branching portion 20, or a child Mach-Zehnder formed by a first child branching portion 30 or a second child branch portion 40.

The dummy pattern 110 has a function of suppressing optical crosstalk between adjacently extending optical waveguides 3, but this dummy pattern 110 may be used as an inspection pattern for inspecting the characteristics of the optical waveguide element 1A. The characteristic inspection using the dummy pattern 110 is not particularly limited, and may measure and evaluate the optical characteristics of the optical waveguide 3, such as bending loss and deflection characteristics, or may measure and evaluate the electrical characteristics, such as electrode absorption loss and electrical band.

As shown in FIG. 1, the dummy pattern 110 has a linear portion 111 extending in a substantially straight line from one end 111a, a linear portion 112 extending in a substantially straight line from the other end 112a, and a substantially U-shaped folded portion C1 connecting the linear portion 111 and the linear portion 112.

The lengths of the linear portions 111 and 112 are not particularly limited. In FIG. 1, the folded portion C1 is located near the inside of the folded portion B1 of the branched waveguide 31, but the linear portions 111 and 112 may be shortened to locate the folded portion C1 closer to the one end 111a or the other end 112a.

The end portion of the dummy pattern 110 may be provided on the end face of the substrate 2, or on the upper surface of the substrate 2. The end portion of the dummy pattern 110 may be configured to allow light input and output by, for example, a grating or SSC. In the optical waveguide element 1A shown in FIG. 1, the one end 111a and the other end 112a of the dummy pattern 110 are provided between the optical input end 10a and the optical output end 70a, and are formed on the same side of the substrate 2.

When the dummy pattern 110 is used as a inspection pattern, the basic characteristics of the optical waveguide 3 can be evaluated. In the optical waveguide element 1A shown in FIG. 1, the dummy pattern 110 includes two linear portions 111 and 112 as the optical waveguide 3, and a folded portion C1 connecting the two linear portions 111 and 112.

When the one end 111a and the other end 112a of the dummy pattern 110 are respectively the input end and the output end of the light, the light input from the one end 111a propagates through the dummy pattern 110 having the folded portion C1 and is output from the other end 112a. By measuring the light output from the other end 112a, the characteristics of the linear waveguide having the folded portion can be evaluated.

In this way, by performing an inspection using the dummy pattern 110, the characteristics of the optical waveguide element 1A can be easily measured and evaluated, and the time and effort required for the characteristic inspection can be reduced. The characteristic inspection using the dummy pattern 110 may be performed in the wafer state or after being made into chips. In addition, since the optical waveguide element 1A has an inspection pattern (dummy pattern 110) built in, even if a defect occurs in the optical waveguide element 1A, the defect analysis can be easily performed using the dummy pattern 110.

Furthermore, by forming the dummy pattern 110 on the substrate 2, it is expected that the effect of suppressing the microloading effect can be achieved. If the real pattern formed on the substrate 2 has a large deviation in pattern density (difference in density), a local difference in etching speed occurs due to the microloading effect, and as a result, there is a risk of characteristic defects occurring due to increased variation in processing depth.

In contrast, in the optical waveguide element 1A shown in FIG. 1, the dummy pattern 110 is formed in the inner region (the region on the inner periphery of the curve caused by the folded portion) of the Mach-Zehnder type optical waveguide having a folded portion. The inner region of the Mach-Zehnder optical waveguide having a folded portion is a region where the density of the real pattern is relatively low, and by forming the dummy pattern 110 in this region, the bias in the pattern density can be reduced.

Furthermore, in the cross section of the action portion, the dummy pattern 110 may be formed linearly symmetrical with respect to the center line of the folded portion of the real pattern. As shown in FIG. 1, the folded portion of the real pattern is a substantially U-shaped portion that connects two optical waveguides 3 that extend substantially parallel to each other, and is line-symmetric with respect to the center line S1 shown in FIG. 1 when the substrate 2 is viewed from above. By forming the dummy pattern 110 so as to be line-symmetric with respect to the center line S1, the bias in the pattern density can be alleviated in a well-balanced manner, and the bias in the pattern density can be reduced.

By forming the dummy pattern 110 in this way so as to reduce the bias in pattern density, the variation in processing depth during etching when manufacturing the optical waveguide element 1A is suppressed, and the characteristics of the optical waveguide element 1A can be expected to be stabilized.

As described above, it can be said that the dummy pattern 110 has multiple functions. As a basic feature of the present invention, the dummy pattern 110 is formed in the region between adjacently extending optical waveguides 3, and thus has the function of suppressing optical crosstalk between the optical waveguides 3. The dummy pattern 110 may also have the function of serving as a inspection pattern (inspection waveguide or inspection electrode) for measuring optical characteristics and electrical characteristics. Furthermore, the dummy pattern 110 may have the function of suppressing the microloading effect by being arranged to reduce the bias in pattern density.

However, the dummy pattern 110 does not necessarily have to have a function as an inspection pattern or a function to suppress the microloading effect, and may have only a function to suppress optical crosstalk. In addition, dummy patterns 110 with different functions (for example, a dummy pattern 110 that combines the function of suppressing optical crosstalk and the function as an inspection pattern, and a dummy pattern 110 that only has the function of suppressing optical crosstalk) may be formed on one substrate 2.

### (Second embodiment)

A second embodiment of the present invention will be described. In the second embodiment, an example is shown in which a dummy pattern is formed in the region between a plurality of optical waveguides that constitute the optical output portion. FIG. 4 is a plan view of an optical waveguide element 1B in the second embodiment of the present invention. The same components as those in the above-mentioned embodiment are given the same reference numerals and descriptions are simplified or omitted.

The optical waveguide element 1B in the second embodiment has a substrate 2 that has an electro-optic effect. A Mach-Zehnder type optical waveguide having a folded portion is formed on the substrate 2 as the optical waveguide 3. The Mach-Zehnder type optical waveguide formed on the substrate 2 of the optical waveguide element 1B has the same shape as that of the optical waveguide element 1A described above. As shown in FIG. 4, the four branched waveguides 31, 32, 41, and 42 are folded back at the folded portions B1, B2, B3, and B4, respectively.

In addition to the real patterns, a dummy pattern 120 is formed on the substrate 2 of the optical waveguide element 1B.

The dummy pattern 120 is formed between adjacently extending real patterns, and is formed inside the outer periphery of the Mach-Zehnder type optical waveguide having a folded portion. In the optical waveguide element 1B shown in FIG. 4, the dummy pattern 120 is formed in the area sandwiched between the optical output waveguide 70 and the optical output waveguide 80 that constitute the optical output portion.

In this way, by forming the dummy pattern 120 in the region between adjacently extending optical waveguides 3, the adjacent optical waveguides 3 can be isolated, and the leaked light from the optical waveguides 3 can be captured by the dummy pattern 120 and guided to the outside or absorbed. As a result, it is possible to suppress optical crosstalk, in which the leaked light from one optical waveguide 3 mixes with the other optical waveguide 3 and interferes with it. In particular, by forming the dummy pattern 120 between the optical output waveguide 70 and the optical output waveguide 80, it is possible to suppress optical crosstalk between the IQ optical signals, which are the output light.

The dummy pattern 120, which has the function of suppressing optical crosstalk, may also be used as an inspection pattern for inspecting the characteristics of the optical waveguide element 1B.

As shown in FIG. 4, the dummy pattern 120 has a linear portion 121 extending in a substantially straight line from one end 121a, a linear portion 122 extending in a substantially straight line from the other end 122a, and a substantially U-shaped folded portion C2 connecting the linear portion 121 and the linear portion 122.

The length of the linear portions 121 and 122 is not particularly limited. In FIG. 4, the folded portion C2 is disposed near the first child multiplexing portion 50 and the second child multiplexing portion 60, but the linear portions 121 and 122 may be made longer and the folded portion C2 may be disposed in a range beyond the first child multiplexing portion 50 and the second child multiplexing portion 60.

The one end 121a and the other end 122a of the dummy pattern 120 are provided between the optical output end 70a and the optical output end 80a, and are formed on the same side of the substrate 2.

When the dummy pattern 120 is used as a inspection pattern, the basic characteristics of the optical waveguide 3 can be evaluated. In the optical waveguide element 1B shown in FIG. 4, the dummy pattern 120 is configured to include two linear portions 121 and 122 as optical waveguides, and a folded portion C2 that connects the two linear portions 121 and 122.

When the one end 121a and the other end 122a of the dummy pattern 120 are respectively the input end and the output end of light, the light input from the one end 121a propagates through the dummy pattern 120 having the folded portion C2 and is output from the other end 122a. By measuring the light output from this other end 122a, the characteristics of the approximately linear optical waveguide 3 having a folded portion can be evaluated.

### (Third embodiment)

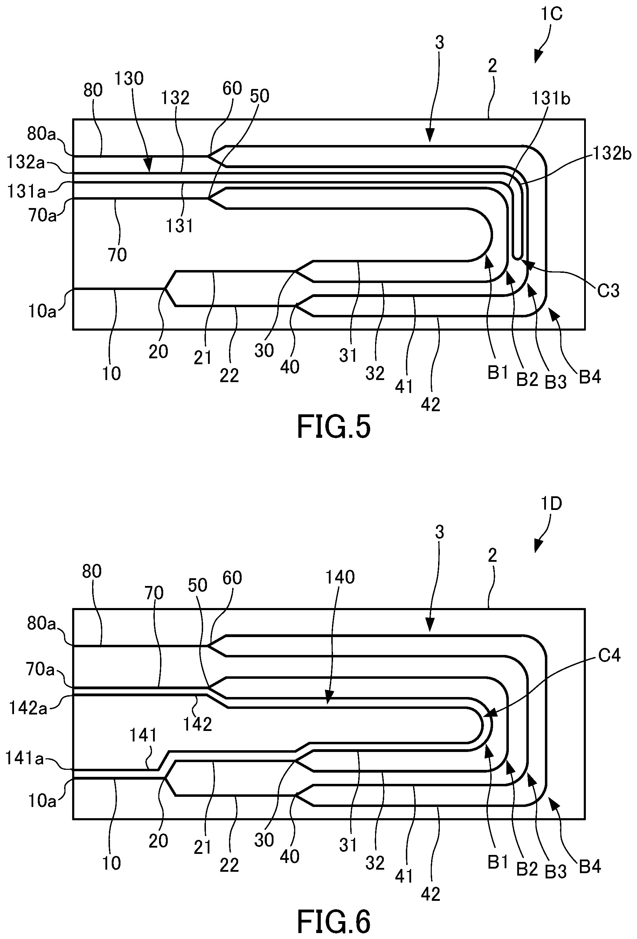

A third embodiment of the present invention will be described. In the third embodiment, an example is shown in which the dummy pattern includes a folded portion and a bent portion. FIG. 5 is a plan view of an optical waveguide element 1C in the third embodiment of the present invention. The same configurations as those in the above-mentioned embodiments are given the same reference numerals and descriptions are simplified or omitted.

The optical waveguide element 1C in the third embodiment has a substrate 2 having an electro-optic effect. The substrate 2 is formed with a Mach-Zehnder type optical waveguide having a folded portion as the optical waveguide 3. The Mach-Zehnder type optical waveguide formed in the substrate 2 of the optical waveguide element 1C has a shape similar to that of the optical waveguide element 1A described above. As shown in FIG. 5, the four branched waveguides 31, 32, 41, and 42 are folded at the folded portions B1, B2, B3, and B4, respectively.

In addition to the real pattern, a dummy pattern 130 is formed in the substrate 2 of the optical waveguide element 1C.

The dummy pattern 130 is formed between adjacently extending real patterns, and is formed inside the outer periphery of the Mach-Zehnder type optical waveguide having a folded portion. In the optical waveguide element 1C shown in FIG. 5, the dummy pattern 130 is formed in the region sandwiched between the optical output waveguide 70 and the optical output waveguide 80 constituting the optical output portion, and in the region sandwiched between the branch waveguide 32 and the branch waveguide 41.

By forming the dummy pattern 130 in the region between the adjacently extending optical waveguides 3 in this way, the adjacent optical waveguides 3 can be isolated, and the leaked light from the optical waveguide 3 can be captured by the dummy pattern 130 and guided to the outside or absorbed. As a result, optical crosstalk in which the leaked light from one optical waveguide 3 mixes with the other optical waveguide 3 and interferes can be suppressed. In particular, by forming the dummy pattern 130 between the optical output waveguide 70 and the optical output waveguide 80, it is possible to suppress optical crosstalk between the IQ optical signals, which are the output light.

The dummy pattern 130, which has the function of suppressing optical crosstalk, may be used as an inspection pattern for inspecting the characteristics of the optical waveguide element 1C.

As shown in FIG. 5, the dummy pattern 130 has a linear portion 131 extending from one end 131a, a linear portion 132 extending from the other end 132a, and a substantially U-shaped folded portion C3 connecting the linear portion 131 and the linear portion 132. The linear portions 131 and 132 respectively have folded portions 131b and 132b that are folded at approximately 90 degrees to match the shape of the Mach-Zehnder type optical waveguide.

The length of the linear portions 131 and 132 is not particularly limited, but the linear portions 131 and 132 may be made longer to approach the waveguide length of the real pattern. In FIG. 5, the folded portion C3 is disposed near the folded portion of the Mach-Zehnder type optical waveguide, but the linear portions 131 and 132 may be made longer and a folded portion that bends at approximately 90 degrees may be provided, for example, so that the folded portion C3 may be disposed near the parent branch portion 20.

The dummy pattern 130 in the third embodiment has a folded portion that bends at approximately 90 degrees. This allows the dummy pattern 130 to be formed along the real pattern. The dummy pattern 130 along the real pattern means that the dummy pattern 130 extends in accordance with the substantial extension direction of the real pattern. In this case, the dummy pattern 130 does not necessarily have to be approximately parallel to the real pattern. The dummy pattern 130 is preferably formed over at least 10% of the real pattern, more preferably over 40% or more, and even more preferably over 70% or more.

One end 131a and the other end 132a of the dummy pattern 130 are provided between the optical output end 70a and the optical output end 80a, and are formed on the same side of the substrate 2.

When the dummy pattern 130 is used as a inspection pattern, the basic characteristics of the optical waveguide 3 can be evaluated. In the optical waveguide element 1C shown in FIG. 5, the dummy pattern 130 is configured to include two linear portions 131 and 132 as optical waveguides and a folded portion C3 connecting the two linear portions 131 and 132, and the linear portions 131 and 132 have folded portions 131b and 132b, respectively.

When one end 131a and the other end 132a of the dummy pattern 130 are respectively the input end and the output end of the light, the light input from one end 131a propagates through the dummy pattern 130 having the folded portion C3 and the bent portions 131b and 132b, and is output from the other end 132a. By measuring the light output from the other end 132a, the characteristics of the optical waveguide 3 having the folded portion and the bent portion reflecting the shape of the real pattern can be evaluated. In addition, for example, a plurality of dummy patterns 130 having different shapes may be formed, and the optical loss of the bent waveguide may be calculated using the plurality of dummy patterns 130.

### (Fourth embodiment)

The fourth embodiment of the present invention will be described. In the fourth embodiment, an example is illustrated in which the dummy pattern is formed along the shape of the real pattern. FIG. 6 is a plan view of an optical waveguide element 1D in the fourth embodiment of the present invention. The same configuration as the above-mentioned embodiment is simplified or omitted, and the same reference numerals are given.

The optical waveguide element 1D in the fourth embodiment has a substrate 2 having an electro-optical effect. A Mach-Zehnder type optical waveguide having a folded portion is formed on the substrate 2 as the optical waveguide 3. The Mach-Zehnder type optical waveguide formed on the substrate 2 of the optical waveguide element 1D has a shape similar to that of the optical waveguide element 1A described above. As shown in FIG. 6, the four branched waveguides 31, 32, 41, and 42 are configured to be folded back at the folded portions B1, B2, B3, and B4, respectively.

In addition to the real patterns, a dummy pattern 140 is formed on the substrate 2 of the optical waveguide element 1D.

The dummy pattern 140 is formed between adjacently extending real patterns, and is formed inside the outer periphery of the Mach-Zehnder type optical waveguide having a folded portion. In the optical waveguide element 1D shown in FIG. 6, the dummy pattern 140 is formed in the area surrounded by the optical input waveguide 10, the branching waveguides 21 and 31, and the optical output waveguide 70 (the area on the inner periphery of the curve caused by the folded portion).

As shown in FIG. 6, the dummy pattern 140 has a linear portion 141 extending from one end 141a, a linear portion 142 extending from the other end 142a, and a substantially U-shaped folded portion C4 connecting the linear portion 141 and the linear portion 142. The linear portion 141 is bent to match the shape of the optical waveguide 3 that is bent at the parent branching portion 20 and the first child branching portion 30. The linear portion 142 is bent to match the shape of the optical waveguide 3 that is bent at the first child multiplexing portion 50. Moreover, the one end 141a and the other end 142a are provided between the optical input end 10a and the optical output end 70a, and are formed on the same side of the substrate 2. The dummy pattern 140 is formed so as to be partially bent in accordance with the shape of the optical waveguide 3, and is formed so as to run parallel to the real pattern while maintaining a certain distance therefrom, as shown in FIG. 6.

By forming the dummy pattern 140 in the region between adjacently extending optical waveguides 3 in this way, the adjacent optical waveguides 3 can be isolated, and the leaked light from the optical waveguide 3 can be captured by the dummy pattern 140 and guided to the outside or absorbed. As a result, optical crosstalk, in which the leaked light from one optical waveguide 3 mixes with the other optical waveguide 3 and interferes with it, can be suppressed. In particular, by forming the dummy pattern 140 in a shape that matches the optical waveguide 3 and running parallel to it, the leaked light from the optical waveguide 3 can be reliably captured, and optical crosstalk can be more reliably suppressed.

The dummy pattern 140, which has the function of suppressing optical crosstalk, may be used as an inspection pattern for inspecting the characteristics of the optical waveguide element 1D.

When the dummy pattern 140 is used as an inspection pattern, the basic characteristics of the optical waveguide 3 can be evaluated. In particular, as shown in FIG. 6, by forming the dummy pattern 140 so as to have a shape that matches the optical waveguide 3, the characteristics of the optical waveguide 3 that reflect the bending shape of the optical waveguide 3 can be evaluated. Furthermore, the configuration in which the dummy pattern 140 is formed so as to run approximately parallel to the real pattern while maintaining a certain distance, as in this embodiment, is not limited to the configuration of this embodiment, and can be applied to the dummy patterns of other examples. Also, only a part of the dummy pattern 140 may be formed so as to run approximately parallel to the real pattern while maintaining a certain distance. The dummy pattern 140 may be formed, for example, on at least one of the straight part and the folded portion of the real pattern.

### (Fifth embodiment)

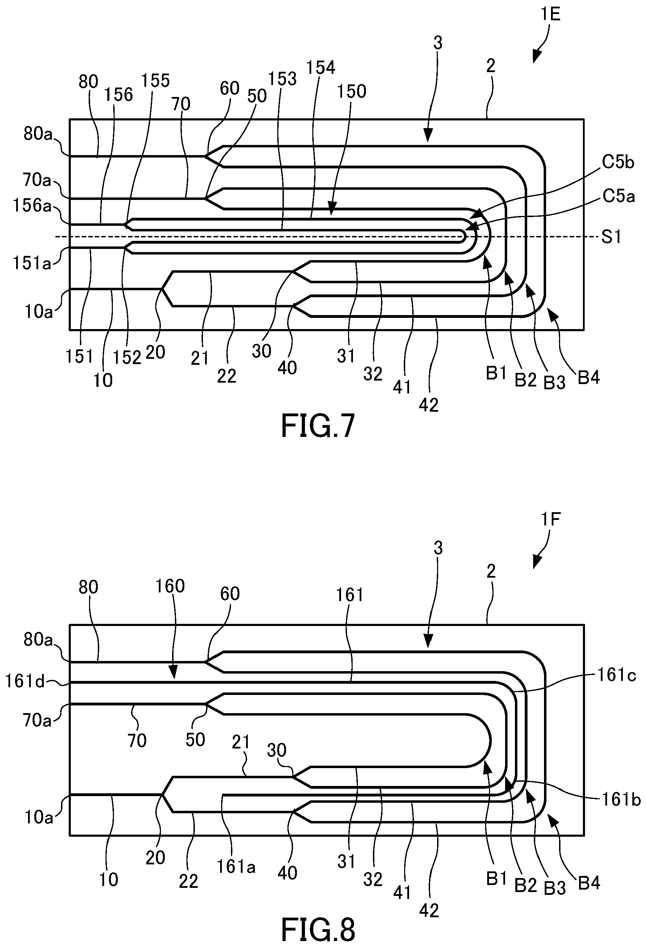

The fifth embodiment of the present invention will be described. In the fifth embodiment, an example in which the dummy pattern is formed in the shape of a Mach-Zehnder structure will be illustrated. FIG. 7 is a plan view of an optical waveguide element 1E in the fifth embodiment of the present invention. The same configuration as in the above-mentioned embodiments will be simplified or omitted, and the same reference numerals will be used.

The optical waveguide element 1E in the fifth embodiment has a substrate 2 having an electro-optic effect. The substrate 2 is formed with a Mach-Zehnder type optical waveguide having a folded portion as the optical waveguide 3. The Mach-Zehnder type optical waveguide formed in the substrate 2 of the optical waveguide element 1E has a shape similar to that of the optical waveguide element 1A described above. As shown in FIG. 7, the four branched waveguides 31, 32, 41, and 42 are folded back at the folded portions B1, B2, B3, and B4, respectively.

In addition to the real pattern, a dummy pattern 150 is formed on the substrate 2 of the optical waveguide element 1E.

The dummy pattern 150 is formed between adjacently extending real patterns, and is formed inside the outer periphery of the Mach-Zehnder type optical waveguide having a folded portion. In the optical waveguide element 1E shown in FIG. 7, the dummy pattern 150 is formed in the region surrounded by the optical input waveguide 10, the branching waveguides 21 and 31, and the optical output waveguide 70 (the region on the inner periphery of the curve caused by the folded portion).

The dummy pattern 150 is formed to have a Mach-Zehnder structure shape having a folded portion, as shown in FIG. 7. The dummy pattern 150 has a substantially straight line portion 151, a first connection portion 152 that branches from the line portion 151 into two line portions 153 and 154, a second connection portion 155 that merges the two line portions 153 and 154 into the line portion 156, and a substantially straight line portion 156. The line portion 152 has a substantially U-shaped folded portion C5a, and the line portion 153 has a substantially U-shaped folded portion C5b. In addition, the end portion 151a of the line portion 151 and the end portion 156a of the line portion 156 are provided between the optical input end 10a and the optical output end 70a, and are formed on the same side of the substrate 2.

By forming the dummy pattern 150 in the region between adjacently extending optical waveguides 3 in this way, the adjacent optical waveguides 3 can be isolated, and the leaked light from the optical waveguides 3 can be captured by the dummy pattern 150 and guided to the outside or absorbed. As a result, optical crosstalk, in which leaked light from one optical waveguide 3 mixes with and interferes with the other optical waveguide 3, can be suppressed.

In addition, the dummy pattern 150, which has the function of suppressing optical crosstalk, may be used as an inspection pattern for inspecting the characteristics of the optical waveguide element 1E.

The dummy pattern 150 has the function of propagating light waves as an optical waveguide. The light input from the end 151a portion of the dummy pattern 150 branches at the first connection portion 152, propagates through the linear portion 153 having the folded portion C5a and the linear portion 154 having the folded portion C5b, and is combined at the second connection portion 155 and output from the end portion 156a. By measuring the light output from this end portion 156a, the characteristics of the Mach-Zehnder optical waveguide having the folded portion can be evaluated.

Furthermore, as shown in FIG. 7, the dummy pattern 150 is formed so as to be linearly symmetrical with respect to the center line S1 of the folded portion of the real pattern. By forming the dummy pattern 150 so as to be linearly symmetrical with respect to the center line S1 in this way, the bias in the pattern density can be mitigated in a well-balanced manner, and the bias in the pattern density can be reduced. As a result, when manufacturing the optical waveguide element 1E, the variation in the processing depth during the etching process due to the microloading effect is suppressed, and the characteristics of the optical waveguide element 1E can be expected to be stabilized.

### (Sixth embodiment)

A sixth embodiment of the present invention will be described. In the sixth embodiment, an example is shown in which the end portion of the dummy pattern is provided on the upper surface of the substrate. FIG. 8 is a plan view of an optical waveguide element 1F in the sixth embodiment of the present invention. The same components as those in the above-mentioned embodiments are given the same reference numerals and descriptions are simplified or omitted.

The optical waveguide element 1F in the sixth embodiment has a substrate 2 having an electro-optic effect. The substrate 2 is formed with a Mach-Zehnder type optical waveguide having a folded portion as the optical waveguide 3. The Mach-Zehnder type optical waveguide formed in the substrate 2 of the optical waveguide element 1F has a shape similar to that of the optical waveguide element 1A described above. As shown in FIG. 8, the four branched waveguides 31, 32, 41, and 42 are folded back at the folded portions B1, B2, B3, and B4, respectively.

In addition to the real patterns, a dummy pattern 160 is formed on the substrate 2 of the optical waveguide element 1F.

The dummy pattern 160 is formed between adjacently extending real patterns, and is formed inside the outer periphery of the Mach-Zehnder type optical waveguide having a folded portion. In the optical waveguide element 1F shown in FIG. 8, the dummy pattern 160 is formed in the region sandwiched between the optical output waveguide 70 and the optical output waveguide 80 constituting the optical output portion, the region sandwiched between the branch waveguide 32 and the branch waveguide 41, and the region sandwiched between the branch waveguide 21 and the branch waveguide 22.

The dummy pattern 160 is composed of linear portions 161. As shown in FIG. 8, the linear portion 161 is bent at approximately 90° at bending portions 161b and 161c to match the shape of the folded portion of the Mach-Zehnder optical waveguide.

The end portion of the dummy pattern 160 may be provided on the end face of the substrate 2, or on the top face of the substrate 2. Here, one end 161a of the linear portion 161 constituting the dummy pattern 160 is disposed between the branching waveguide 21 and the branching waveguide 22, and is provided on the top face of the substrate 2. On the other hand, the other end 161d of the linear portion 161 is disposed between the optical output end 70a and the optical output end 80a, and is provided on the end face of the substrate 2.

By forming the dummy pattern 160 in the region between adjacently extending optical waveguides 3 in this way, the adjacent optical waveguides 3 can be isolated, and the leaked light from the optical waveguides 3 can be captured by the dummy pattern 160 and guided to the outside or absorbed. As a result, optical crosstalk, in which the leaked light from one optical waveguide 3 mixes with and interferes with the other optical waveguide 3, can be suppressed.

In addition, the dummy pattern 160, which has the function of suppressing optical crosstalk, may be used as an inspection pattern for inspecting the characteristics of the optical waveguide element 1F.

The Mach-Zehnder optical waveguide formed in the optical waveguide element 1F has a folded portion formed by arranging bending portions that bend at approximately 90 degrees in two places. The dummy pattern 160 also has bending portions 161b and 161c that are bent at approximately 90 degrees, and is set to the same number of bending portions as the optical waveguide 3, which is the real pattern.

One end 161a of the linear portion 161 can be configured to enable light input from, for example, a grating. Light input from one end 161a of the linear portion 161 propagates through the linear portion 161 having bending portions 161b and 161c, and is output from the other end 161d of the linear portion 161. By measuring the light output from this other end 161d, the bending loss in the optical waveguide 3, which is the real pattern, can be estimated.

### (Seventh embodiment)

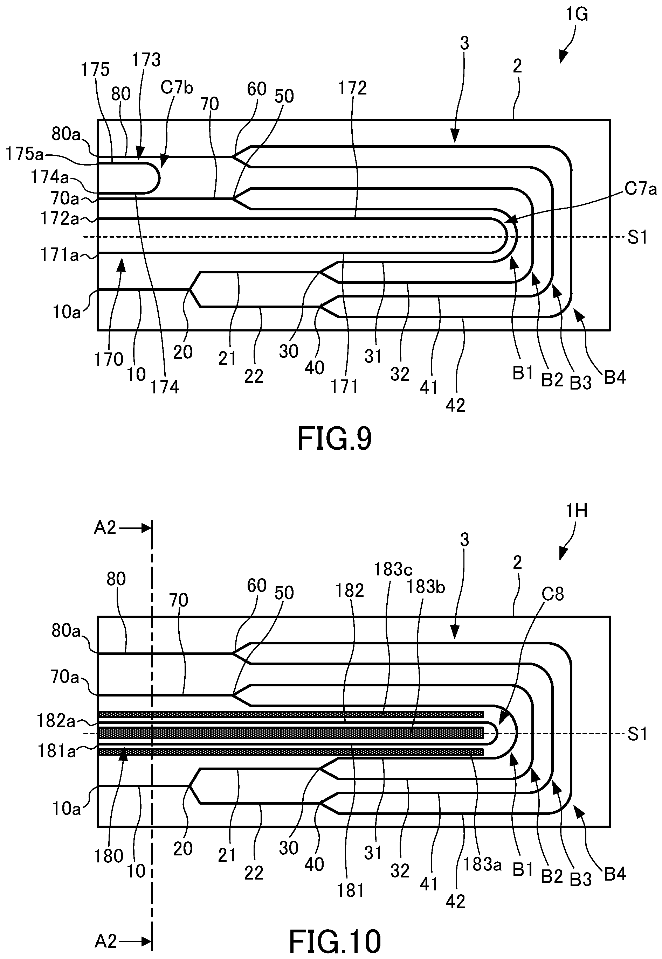

A seventh embodiment of the present invention will be described. In the seventh embodiment, an example in which multiple dummy patterns are provided will be illustrated. FIG. 9 is a plan view of an optical waveguide element 1G in the seventh embodiment of the present invention. The same components as those in the above-mentioned embodiments are given the same reference numerals and the description is simplified or omitted.

The optical waveguide element 1G in the seventh embodiment has a substrate 2 having an electro-optic effect. The substrate 2 is formed with a Mach-Zehnder type optical waveguide having a folded portion as the optical waveguide 3. The Mach-Zehnder type optical waveguide formed in the substrate 2 of the optical waveguide element 1G has a shape similar to that of the optical waveguide element 1A described above. As shown in FIG. 9, the four branched waveguides 31, 32, 41, 42 are folded back at the folded portions B1, B2, B3, B4, respectively.

In addition to the real patterns, dummy patterns 170, 173 are formed in the substrate 2 of the optical waveguide element 1G.

The dummy pattern 170 is formed between adjacently extending real patterns, and is formed inside the outer periphery of the Mach-Zehnder type optical waveguide having a folded portion. In the optical waveguide element 1G shown in FIG. 9, the dummy pattern 170 is formed in the area surrounded by the optical input waveguide 10, the branching waveguides 21 and 31, and the optical output waveguide 70 (the area on the inner periphery of the curve caused by the folded portion).

The dummy pattern 173 is formed between adjacently extending real patterns, and is formed inside the outer periphery of the Mach-Zehnder type optical waveguide having a folded portion. In the optical waveguide element 1G shown in Fig. 9, the dummy pattern 173 is formed in a region sandwiched between the optical output waveguide 70 and the optical output waveguide 80 which constitute the optical output portion.

By forming the dummy patterns 170, 173 in the region between the adjacently extending optical waveguides 3 in this way, the adjacent optical waveguides 3 can be isolated, and the leaked light from the optical waveguide 3 can be captured by the dummy patterns 170, 173 and guided to the outside or absorbed. As a result, it is possible to suppress optical crosstalk, in which the leaked light from one optical waveguide 3 mixes with the other optical waveguide 3 and interferes with it. The dummy pattern 170 can suppress optical crosstalk between the optical input waveguide 10 and the optical output waveguide 70. The dummy pattern 173 can suppress optical crosstalk between the optical output waveguide 70 and the optical output waveguide 80.

The dummy patterns 170, 173, which have the function of suppressing optical crosstalk, may be used as inspection patterns for inspecting the characteristics of the optical waveguide element 1G.

As shown in FIG. 9, the dummy pattern 170 has a linear portion 171 extending in a substantially straight line from one end 171a, a linear portion 172 extending in a substantially straight line from the other end 172a, and a substantially U-shaped folded portion C7a connecting the linear portion 171 and the linear portion 172. The one end 171a and the other end 172a of the dummy pattern 170 are provided between the optical input end 10a and the optical output end 70a, and are formed on the same side of the substrate 2.

As shown in FIG. 9, the dummy pattern 173 has a linear portion 174 extending in a substantially straight line from one end 174a, a linear portion 175 extending in a substantially straight line from the other end 175a, and a substantially U-shaped folded portion C7b connecting the linear portion 174 and the linear portion 175. The one end 174a and the other end 175a of the dummy pattern 173 are provided between the optical output end 70a and the optical output end 80a, and are formed on the same side of the substrate 2.

When the dummy patterns 170 and 173 are used as inspection patterns, the basic characteristics of the optical waveguide 3 can be evaluated. The multiple dummy patterns 170 and 173 may be set under different conditions. For example, by setting the multiple dummy patterns 170 and 173 to different waveguide lengths, it is possible to calculate the propagation loss of light that depends on the waveguide length. In addition, the waveguide lengths of the multiple dummy patterns 170 and 173 may be the same, and the input and output ends may have different structures. For example, if one end 171a of one dummy pattern 170 has an SSC structure and one end 174a of the other dummy pattern 173 has a grating structure, the coupling loss of the SSC and grating can be predicted.

The dummy pattern 170 is formed so as to be linearly symmetrical with respect to the center line S1 of the folded portion of the real pattern, as shown in FIG. 9. By forming the dummy pattern 170 so as to be linearly symmetrical with respect to the center line S1 in this way, the bias in the pattern density can be alleviated in a well-balanced manner, and the bias in the pattern density can be reduced. As a result, when manufacturing the optical waveguide element 1G, the variation in the processing depth during the etching process due to the microloading effect is suppressed, and the characteristics of the optical waveguide element 1G can be expected to be stabilized.

### (Eighth embodiment)

The eighth embodiment of the present invention will be described. In the eighth embodiment, an example is shown in which a inspection pattern including a inspection waveguide and a inspection electrode is used as a dummy pattern. FIG. 10 is a plan view of an optical waveguide element 1H in the eighth embodiment of the present invention. The same components as those in the above-mentioned embodiments are given the same reference numerals and explanations are simplified or omitted.

The optical waveguide element 1H in the eighth embodiment has a substrate 2 having an electro-optic effect. The substrate 2 is formed with a Mach-Zehnder type optical waveguide having a folded portion as the optical waveguide 3. The Mach-Zehnder type optical waveguide formed in the substrate 2 of the optical waveguide element 1H has a shape similar to that of the optical waveguide element 1A described above. As shown in FIG. 10, the four branched waveguides 31, 32, 41, and 42 are folded back at the folded portions B1, B2, B3, and B4, respectively.

In addition to the real patterns, dummy patterns 180, 183a, 183b, and 183c are formed on the substrate 2 of the optical waveguide element 1H.

The dummy pattern 180 has the function of propagating light waves as a inspection waveguide. As shown in FIG. 10, the dummy pattern 180 has a linear portion 181 extending in a substantially straight line from one end 181a, a linear portion 182 extending in a substantially straight line from the other end 182a, and a substantially U-shaped folded portion C8 connecting the linear portion 181 and the linear portion 182. The one end 181a and the other end 182a of the dummy pattern 180 are provided between the optical input end 10a and the optical output end 70a, and are formed on the same side of the substrate 2.

On the other hand, the dummy patterns 183a, 183b, and 183c function as inspection electrodes that apply a high-frequency electrical signal to the dummy pattern 180 to modulate the light wave. As shown in FIG. 10, the dummy patterns 183a, 183b, and 183c as inspection electrodes are arranged to sandwich the linear portion 181 and the linear portion 182 that constitute the dummy pattern 180.

The dummy pattern 180 as the inspection waveguide can be formed, for example, by a convex portion formed on the substrate 2. Also, the dummy patterns 183a, 183b, and 183c as the inspection electrodes are made of a metal material such as gold or copper that is used as an electrode.

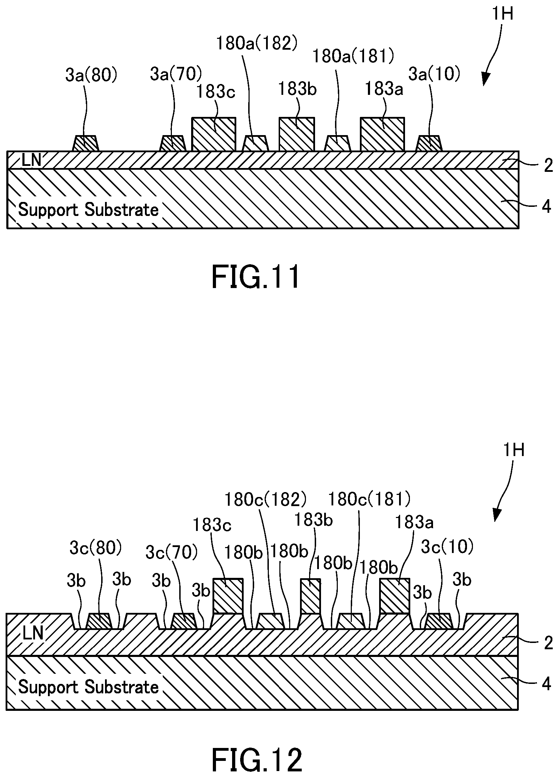

The dummy pattern 180 may be formed on the substrate 2 by providing a convex portion (convex portion 180a in FIG. 11) that protrudes from the surface of the substrate 2, as shown in the cross-sectional view of FIG. 11, for example. Also, the dummy pattern 180 may be formed on the substrate 2 by forming grooves 180b on both sides of the portion corresponding to the dummy pattern 180 and providing a convex portion (convex portion 180c in FIG. 12) sandwiched between the grooves 180b, as shown in the cross-sectional view of FIG. 12. The three dummy patterns 183a, 183b, and 183c are provided adjacent to the convex portions (convex portion 180a or convex portion 180c) of the two linear portions 181 and 182, as shown in FIG. 11 and FIG. 12, and are arranged to sandwich the linear portions 181 and 182.

When the dummy patterns 180, 183a, 183b, and 183c are used as inspection patterns, it is possible to perform a characteristic inspection related to the modulation operation of the optical waveguide element 1H (for example, measurement of absorption loss by the electrodes). It is preferable to set the positional relationship and the distance between the inspection waveguide and the inspection electrode to be the same as the positional relationship and the distance between the inspection waveguide and the inspection electrode in the real modulation operation.

The dummy patterns 180, 183a, 183b, and 183c are arranged to isolate the adjacent optical waveguides 3, and also have the effect of suppressing optical crosstalk. As shown in FIG. 10, the dummy pattern 180 is formed to be linearly symmetrical with respect to the center line S1 of the folded portion of the real pattern, and also has the effect of suppressing the microloading effect.

### (Ninth embodiment)

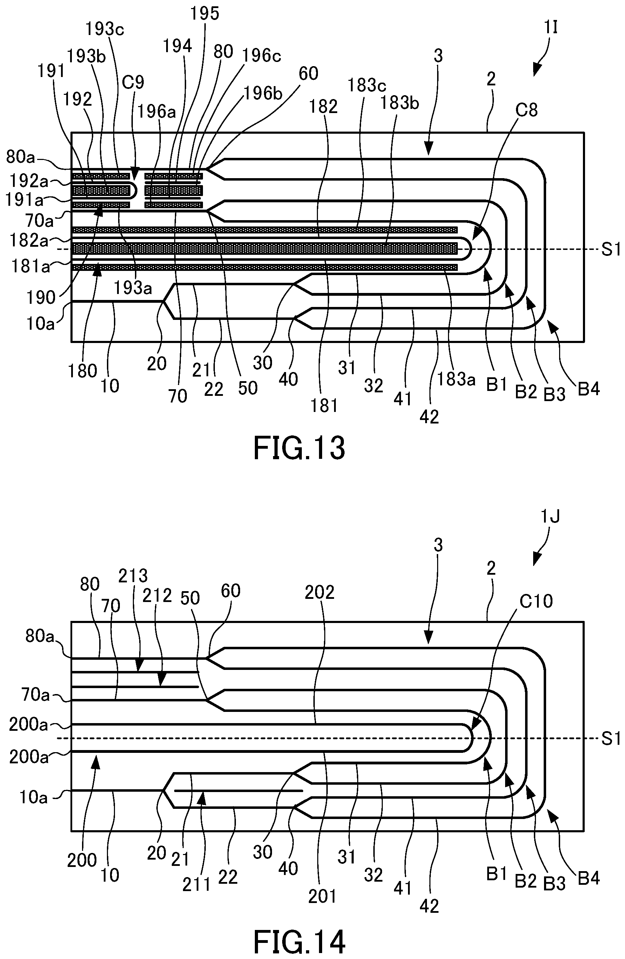

A ninth embodiment of the present invention will be described. In the ninth embodiment, a mode in which multiple inspection patterns are provided as dummy patterns will be exemplified. FIG. 13 is a plan view of an optical waveguide element 1I in the ninth embodiment of the present invention. The same configurations as those in the above-mentioned embodiments are given the same reference numerals and descriptions are simplified or omitted.

The optical waveguide element 1I in the ninth embodiment has a substrate 2 having an electro-optic effect. A Mach-Zehnder type optical waveguide having a folded portion is formed on the substrate 2 as the optical waveguide 3. The Mach-Zehnder type optical waveguide formed on the substrate 2 of the optical waveguide element 1I has a shape similar to that of the optical waveguide element 1A described above. As shown in FIG. 13, the four branched waveguides 31, 32, 41, 42 are configured to be folded back at the folded portions B1, B2, B3, B4, respectively.

In addition to the real patterns, dummy patterns 180, 183a, 183b, 183c are formed on the substrate 2 of the optical waveguide element 1I. The dummy patterns 180, 183a, 183b, 183c have the same configuration as in the eighth embodiment described above, and can be used as inspection patterns.

In addition to the dummy patterns 180, 183a, 183b, and 183c, dummy patterns 190, 193a, 193b, and 193c that can be used as inspection patterns are formed on the substrate 2 of the optical waveguide element 1I.

The dummy pattern 190 has the function of propagating light waves as a inspection waveguide. As shown in FIG. 13, the dummy pattern 190 has a linear portion 191 extending in a substantially straight line from one end 191a, a linear portion 192 extending in a substantially straight line from the other end 192a, and a substantially U-shaped folded portion C9 connecting the linear portion 191 and the linear portion 192. The one end 191a and the other end 192a of the dummy pattern 190 are provided between the optical output end 70a and the optical output end 80a, and are formed on the same side of the substrate 2.

On the other hand, the dummy patterns 193a, 193b, and 193c function as inspection electrodes that apply a high-frequency electrical signal to the dummy pattern 190 to modulate the light waves. As shown in FIG. 13, the dummy patterns 193a, 193b, and 193c as inspection electrodes are arranged to sandwich the linear portion 191 and the linear portion 192 that constitute the dummy pattern 190.

The substrate 2 of the optical waveguide element 1I is further provided with dummy patterns 194, 195, 196a, 196b, and 196c that can be used as inspection patterns.

The dummy patterns 194 and 195 function as inspection waveguides to propagate light waves. As shown in FIG. 13, the dummy patterns 194, 195 are formed to extend approximately parallel to each other between the optical output waveguide 70 and the optical output waveguide 80. Both ends of the dummy patterns 194, 195 are designed to allow light to be input and output from the top surface of the substrate 2.

On the other hand, the dummy patterns 196a, 196b, 196c function as inspection electrodes that apply high-frequency electrical signals to the dummy patterns 194, 195 to modulate the light waves. The dummy patterns 196a, 196b, 196c as inspection electrodes are arranged to sandwich the dummy patterns 194, 195, as shown in FIG. 13.

In this way, by providing a plurality of inspection patterns including inspection waveguides and inspection electrodes, it is possible to carry out characteristic inspections (particularly, measurement of the electrical band) related to the modulation operation of the optical waveguide element 1I. Although it depends on the measurement method, it is preferable to use a two-stage electrode configuration when measuring the electrical band.

The dummy patterns 180, 183a, 183b, 183c, dummy patterns 190, 193a, 193b, 193c, and dummy patterns 194, 195, 196a, 196b, 196c are all arranged to isolate adjacent optical waveguides 3, and also have the effect of suppressing optical crosstalk. In addition, the dummy pattern 180 is formed so as to be linearly symmetrical with respect to the center line S1 of the folded portion of the real pattern, as shown in FIG. 13, and also has the effect of suppressing the microloading effect.

### (Tenth embodiment)

A tenth embodiment of the present invention will be described. In the tenth embodiment, an example is shown in which dummy patterns that can be used as inspection patterns and dummy patterns that cannot be used as inspection patterns are both included. FIG. 14 is a plan view of an optical waveguide element 1J in the tenth embodiment of the present invention. The same configurations as those in the above-mentioned embodiments are given the same reference numerals and descriptions are simplified or omitted.

The optical waveguide element 1J in the tenth embodiment has a substrate 2 having an electro-optic effect. The substrate 2 is formed with a Mach-Zehnder type optical waveguide having a folded portion as the optical waveguide 3. The Mach-Zehnder type optical waveguide formed in the substrate 2 of the optical waveguide element 1J has a shape similar to that of the optical waveguide element 1A described above. As shown in FIG. 14, the four branched waveguides 31, 32, 41, and 42 are folded back at the folded portions B1, B2, B3, and B4, respectively.

In addition to the real pattern, a dummy pattern 200 and dummy patterns 211, 212, and 213 are formed on the substrate 2 of the optical waveguide element 1J.

The dummy pattern 200 is formed between adjacently extending real patterns, and is formed inside the outer periphery of the Mach-Zehnder type optical waveguide having a folded portion. In the optical waveguide element 1J shown in FIG. 14, the dummy pattern 200 is formed in the area surrounded by the optical input waveguide 10, the branching waveguides 21 and 31, and the optical output waveguide 70 (the area on the inner periphery of the curve caused by the folded portion).

As shown in FIG. 14, the dummy pattern 200 has a linear portion 201 extending in a substantially straight line from one end 201a, a linear portion 202 extending in a substantially straight line from the other end 202a, and a substantially U-shaped folded portion C10 connecting the linear portion 201 and the linear portion 202. The one end 201a and the other end 202a of the dummy pattern 200 are provided between the optical input end 10a and the optical output end 70a, and are formed on the same side of the substrate 2.

As shown in FIG. 14, the dummy pattern 211 is formed so as to extend in a substantially straight line between the branching waveguide 21 and the branching waveguide 22. The dummy patterns 212 and 213 are formed so as to extend in a substantially parallel manner between the optical output waveguide 70 and the optical output waveguide 80, as shown in FIG. 14.

The dummy pattern 200 is arranged to isolate adjacent optical waveguides 3, and has the effect of suppressing optical crosstalk. Furthermore, the dummy pattern 200 is configured to be able to propagate light waves as an inspection waveguide, and can be used as an inspection pattern for inspecting the characteristics of the optical waveguide element 1J.

The dummy patterns 211, 212, and 213 are also arranged to isolate adjacent optical waveguides 3, and have the effect of suppressing optical crosstalk. However, the dummy patterns 211, 212, and 213 are not configured to be able to propagate light waves as an inspection waveguide, and cannot be used as an inspection pattern for inspecting the characteristics of the optical waveguide element 1J.

In this way, the optical waveguide element 1J may include a mixture of the dummy pattern 200 that can be used as an inspection pattern and the dummy patterns 211, 212, and 213 that can be used as inspection patterns.

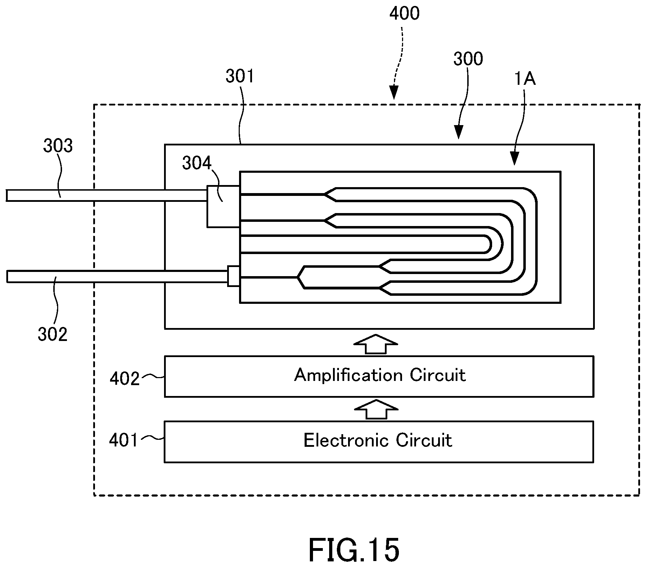

The optical modulator and optical transmitter according to the present invention will be described below. FIG. 15 is a plan view showing an optical modulator 300 and an optical transmitter 400 according to the present invention. The present invention can provide an optical modulator and an optical transmitter using the optical waveguide elements 1A to 1J in each of the above-mentioned embodiments. Furthermore, as an example, FIG. 15 shows an optical modulator 300 and an optical transmitter 400 having the optical waveguide element 1A in the first embodiment.

The optical modulator 300 shown in FIG. 15 has an optical waveguide element 1A, a housing 301, an input optical fiber 302, and an output optical fiber 303. Although not shown in FIG. 15, the substrate 2 of the optical waveguide element 1A is provided with a modulation electrode, a bias electrode, and the like for modulating an optical signal.

In the optical modulator 300, the optical waveguide element 1A is accommodated in the housing 301. An input optical fiber 302 is connected to the optical input portion of the optical waveguide element 1A, and an output optical fiber 303 is connected to the optical output portion. In this way, by connecting the optical waveguide element 1A in the housing 301 to the outside of the housing 301 with an optical fiber, a compact optical modulator 300 can be provided. A spatial optical system may be interposed between the optical input portion and optical output portion of the optical waveguide element 1A and the input optical fiber 302 and output optical fiber 303. The above-mentioned optical waveguide element 1A has two optical output ends 70a and 80a. In this case, the optical modulator 300 may have a polarization synthesis portion 304 and be configured to perform polarization synthesis of the light output from the two optical output ends 70a and 80a and guide it to the output optical fiber 303.

Also, as shown in FIG. 15, an optical transmitter 400 can be configured by connecting an electronic circuit 401 that generates a modulation signal (electrical signal) that is a high-frequency signal for performing a modulation operation to the optical modulator 300. An amplifier circuit 402 may be provided to amplify the modulation signal generated by the electronic circuit 401. The electronic circuit 401 and the amplifier circuit 402 may be disposed outside the housing 301 of the optical modulator 300, but disposing the electronic circuit 401 and the amplifier circuit 402 inside the housing 301 can achieve efficient transmission of the modulated signal and miniaturization of the optical transmitter 400.

In addition, a light source may be mounted on the optical transmitter 400, and the light emitted by the light source may be configured to be input to the optical input portion of the optical waveguide element 1A. As a result, the light output from the light source is modulated by the optical modulator 300, and can be output from the optical transmitter 400 as modulated light.

The above-explained embodiments are described to facilitate understanding of the present invention, and do not limit the present invention. The components disclosed in the above-mentioned embodiments are intended to include all design modifications and equivalents that fall within the technical scope of the present invention. In addition, the present invention also encompasses technical ideas obtained by appropriately combining the concepts exemplified in each embodiment.

### [Explanation of Symbols]

1A, 1B, 1C, 1D, 1E, 1F, 1G, 1H, 1I, 1J Optical waveguide element
2 Substrate
3 Optical waveguide
3a, 3c, 110a, 110c, 180a, 180c Convex portion
3b, 110b, 180b Groove
4 Support substrate (reinforcement substrate)
10 Optical input waveguide
10a Optical input end
20 Parent branch portion
21 Branch waveguide (first parent branch waveguide)
22 Branch waveguide (second parent branch waveguide)
31 Branch waveguide (first child branch waveguide)
32 Branch waveguide (second child branch waveguide)
41 Branching waveguide (third branching waveguide)
42 Branching waveguide (fourth branching waveguide)
30 First branching portion
40 Second branching portion
50 First multiplexing portion (first multiplexing portion)
60 Second multiplexing portion (second multiplexing portion)
70 Optical output waveguide (first optical output waveguide)
70a, 80a, 80b Optical output end
80 Optical output waveguide (second optical output waveguide)
110, 120, 130, 140, 150, 160, 170, 173, 180, 183a, 183b, 183c, 190, 193a, 193b, 193c, 1 94, 195, 196a, 196b, 196c, 200, 211, 212, 213 Dummy pattern
111, 112, 121, 122, 131, 132, 141, 142, 151, 152, 153, 154, 156, 161, 171, 172, 174, 175, 181, 182, 191, 192, 201, 202 Linear portion
111a, 121a, 131a, 141a, 161a, 171a, 174a, 181a, 191a, 201a One end
112a, 122a, 132a, 142a, 161d, 172a, 17 5a, 182a, 192a, 202a Other end
131b, 132b, 161b, 161c Bending portion
151a, 156a End portion
152 First connection portion
155 Second connection portion
300 Optical modulator
301 Housing
302 Input optical fiber
303 Output optical fiber
304 Polarization synthesis portion
400 Optical transmitter
401 Electronic circuit
402 Amplification circuit
B1, B2, B3, B4, C1, C2, C3, C4, C5a, C5b, C7a, C7b, C8, C9, C10 Folded portion
S1 Center line

## Claims

1. An optical waveguide element including optical waveguides formed on a substrate having an electro-optic effect, **characterized in that**:
the optical waveguide is configured to include a Mach-Zehnder type optical waveguide having a folded portion; and
a dummy pattern capable of suppressing optical crosstalk is formed in the region between the adjacently extending optical waveguides.

2. The optical waveguide element according to claim 1, **characterized in that** the dummy pattern is formed in the region between the optical waveguide constituting the optical input portion and the optical waveguide constituting the optical output portion.

3. The optical waveguide element according to claim 1, **characterized in that** the dummy pattern is formed in the region between a plurality of optical waveguides constituting the optical output portion.

4. The optical waveguide element according to any one of claims 1 to 3, **characterized in that** the input end and the output end of the dummy pattern are provided on the end face or the top face of the substrate.

5. The optical waveguide element according to any one of claims 1 to 3, **characterized in that** the dummy pattern has a folded portion.

6. The optical waveguide element according to claim 5, **characterized in that** the optical input end and the optical output end of the Mach-Zehnder type optical waveguide and the input end and the output end of the dummy pattern are formed on the same side of the substrate.

7. The optical waveguide element according to any one of claims 1 to 3, **characterized in that** The Mach-Zehnder type optical waveguide, between an optical input portion including an optical input waveguide and an optical output portion including first and second optical output waveguides, includes a parent branch portion that branches a light wave propagating through the optical input waveguide and propagates the light wave to first and second parent branch waveguides, a first child branch portion that branches the light wave propagating through the first parent branch waveguide and propagates the light wave to first and second child branch waveguides, a first multiplexing portion that combines the light waves propagating through the first and second child branch waveguides and propagates through the first optical output waveguide, a second child branch portion that branches the light wave propagating through the second parent branch waveguide and propagates the light wave to the third and fourth child branch waveguides, and a second multiplexing portion that combines the light waves propagating through the third and fourth child branch waveguides and propagates the light wave to the second optical output waveguide, and each of the first to fourth child branch waveguides has the folded portion.

8. The optical waveguide element according to claim 7, **characterized in that** the dummy pattern is formed at least in a region between a plurality of optical waveguides constituting the optical output portion, and has a folded portion in any of a region between the first parent branch waveguide and the second parent branch waveguide adjacent to each other, a region between the second child branch waveguide and the third child branch waveguide adjacent to each other, and a region between the first optical output waveguide and the second optical output waveguide adjacent to each other.

9. The optical waveguide element according to claim 8, **characterized in that** the first optical output waveguide and the second optical output waveguide are substantially linear.

10. The optical waveguide element according to any one of claims 1 to 3, **characterized in that** the dummy pattern is formed so as to be linearly symmetrical with respect to the center line of the folded portion of the Mach-Zehnder type optical waveguide.

11. The optical waveguide element according to any one of claims 1 to 3, **characterized in that** the dummy pattern is formed to have a portion that runs substantially parallel to the optical waveguide while maintaining a constant distance with respect to the optical waveguide.

12. An optical modulator comprising the optical waveguide element described in any one of claims 1 to 3, a housing that houses the optical waveguide element, an input optical fiber connected to an optical input portion of the optical waveguide element, and an output optical fiber connected to an optical output portion of the optical waveguide element.

13. An optical transmitter comprising the optical modulator described in claim 12 and an electronic circuit for generating an electrical signal for causing the optical waveguide element to perform a modulation operation.
